# EUROPÄISCHE PATENTSCHRIFT

(11) **EP 3 172 951 B1**
(45) Veröffentlichungstag und Bekanntmachung des Hinweises auf die Patenterteilung: **03.03.2021**
(21) Anmeldenummer: 16401077.9
(22) Anmeldetag: 02.11.2016
(51) Int. Cl.: A01B 15/06, A01B 23/02

(54) **BODENBEARBEITUNGSWERKZEUG**
SOIL WORKING TOOL
OUTIL DE TRAITEMENT DE SOL

(30) Priorität: 06.11.2015 DE 102015119182
(43) Veröffentlichungstag der Anmeldung: 31.05.2017
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04657 Narsdorf (DE)

(56) Entgegenhaltungen:
- AT-U1- 11 730
- DE-A1-102011 102 053
- DE-A1-102013 102 420

## Beschreibung

Die Erfindung betrifft ein Bodenbearbeitungswerkzeug gemäß des Oberbegriffes des Patentanspruches 1.

Ein derartiges Bodenbearbeitungswerkzeug ist in EP 2 445 329 B1 beschrieben. Bei diesen Bodenbearbeitungswerkzeug sind, wenn es als Grubberschar ausgebildet ist, an der Scharspitze ein oder mehrere Hartmetallelemente als Schneidelement unter Vermittlung von Lotmaterial angeordnet. Auf diese Weise wird ein sehr guter Verschleißschutz für die Zinkenspitze erreicht. Beim Grubberschar ist der weitere, sich der an die Zinkenspitze anschließende Boden führende Bodenführungsbereich des Grubberschares nicht durch Verschleißschutzelemente geschützt. In dem Ausführungsbeispiel gemäß den Figuren 7 und 8 ist in diesem Stand der Technik ein Pflugschar gezeigt, wobei einerseits der Schneidbereich durch mehrere Hartmetallplatten und das Leitblech durch in dieses eingearbeitete und beabstandet zueinander angeordnete Ausnehmungen eingesetzte Hartstoffabdeckungen geschützt. Diese Ausgestaltung ist sehr aufwändig und teuer. Für ein Grubberschar ist eine derartige Ausgestaltung nicht anwendbar.

Die DE 10 2013 102 420 A1 offenbart eine Werkzeugkombination mit einer Scharspitze und einem daran angeschlossenen Leitelement, wobei die Scharspitze und das Leitelement Schraubaufnahmen zur Befestigung an einem Zinken aufweisen. Aus der DE 10 2011 102 053 A1 ist ein Schar für Bodenbearbeitungsgeräte wie zum Beispiel Grubber oder Pflüge bekannt, das ein Leitteil und ein Schneidteil mit Schneide aus Hartmaterial aufweist. Die AT 11 730 U1 offenbart ein Verfahren zur Herstellung einer Schneidkante und eine danach hergestellte Schneidkante für ein Messer oder für einen Werfer für landwirtschaftlichen, gewerblichen oder industriellen Einsatz, die eine selbstschärfende Charakteristik aufweist.

Der Erfindung liegt die Aufgabe zu Grunde, mit einfacheren und preiswerteren Mitteln einen verbesserten Verschleißschutz für den sich an den zinkenartigen, den Boden aufbrechenden Bereich des Bodenbearbeitungswerkzeuges anschließenden Bodenführungsbereich zu schaffen.

Diese Aufgabe wird erfindungsgemäß durch ein Bodenbearbeitungswerkzeug gemäß Anspruch 1 gelöst. Bevorzugte Ausführungsformen sind in den abhängigen Ansprüchen wiedergegeben. Dabei ist sich unmittelbar an das Hartstoffelement oder die Hartstoffelemente anschließend mittels Laserschweißung verschleißfestes Material als Verschleißschutzschicht auf den sich an den zinkenartigen Bereich anschließenden Bodenführungsbereich zum Führen des Bodens als zumindest eine Verschleißschutzschicht aus zumindest einem verschleißfesten Material aufgebracht.

Infolge dieser Maßnahme wird durch eine Laserschweißung verschleißfestes Material als Verschleißschutzschicht auf den sich an den zinkenartigen vorderen

Bereich des Bodenbearbeitungswerkzeuges, insbesondere eines Grubberschares anschließenden Bodenführungsbereiches zumindest eine Verschleißschutzschicht in einfacher und relativ preiswerter Weise aufgebracht. Diese durch die Laserschweißung aufgebrachte Verschleißschutzschicht schützt diesen Bereich des Bodenbearbeitungswerkzeuges.

Um in einfacher Weise die Menge von verschleißfestem Material für die dem Verschleiß unterliegenden Bereiche an den auftretenden Verschleiß anpassen zu können, umso eine optimierte Aufbringung der Menge von verschleißfestem Material zu erreichen, ist auf den sich an den zinkenartigen Bereich anschließenden Bereich auf dem Bodenführungsbereich des Bodenbearbeitungswerkzeuges eine erste Verschleißschutzschicht über die gesamte Breite des Bodenführungsbereich des Bodenbearbeitungswerkzeuges aufgebracht, und in dem ersten, vorderen Bodenführungsbereich des Bodenbearbeitungswerkzeuges auf die erste Verschleißschutzschicht jeweils in den seitlichen Randbereichen des Bodenführungsbereich des Bodenbearbeitungswerkzeuges jeweils ein streifenartiger Verschleißschutzstreifen mittels Laserschweißen als zweite Verschleißschutzschicht aufgebracht. Somit wird eine entsprechend angepasste Gesamtverschleißschutzschicht aufgebracht.

Hierbei ist besonders vorteilhaft, wenn die streifenartigen Verschleißschutzstreifen beabstandet zueinander angeordnet sind. Somit sind die streifenartigen Verschleißschutzstreifen nur auf die besonders einem starken Verschleiß unterliegenden Seitenbereiche des Grubberschares aufgebracht. Somit kann zwischen den beiden seitlichen streifenartigen Verschleißschutzstreifen für die zweite Verschleißschutzschicht ein Freiraum bleiben. Diese ist eine sehr ökonomische Materialaufbringung

Eine optimierte Aufbringung vom Verschleißmaterial, um einen verbesserten Verschleißschutzschicht erhalten, wird dadurch erreicht, dass die erste sich über die gesamte Breite des Bodenführungsbereich erstreckender Verschleißschutzschicht eine Länge von zumindest 150-250 mm, vorzugsweise 200 mm und die zweite als jeweiliger seitliche streifenartige Verschleißschutzstreifen ausgebildete Verschutzschicht jeweils eine Länge von zumindest 80-150 mm, vorzugsweise 100 mm aufweist.

Um einen ausreichenden Schutz für die Seitenbereiche des Bodenbearbeitungswerkzeuges im Bodenführungsbereich zu erhalten, ist vorgesehen, dass jeder seitliche Verschleißschutzstreifen etwa ¼ der Breite des bodenführenden Bereiches des Bodenbearbeitungswerkzeuges aufweist.

Ein ausreichender Verschleißschutzschicht für die am häufigsten in der Praxis anzutreffenden Einsatzbedingungen wird dadurch erreicht, dass die eine erste Verschleißschutzschicht eine Dicke von 0,1 - 3 mm, vorzugsweise etwa 0,5 mm und die zweite als seitliche streifenartige Verschleißschutzstreifen ausgebildete Verschutzschicht eine Dicke von 0,5 - 5 mm, vorzugsweise etwa 1 mm.

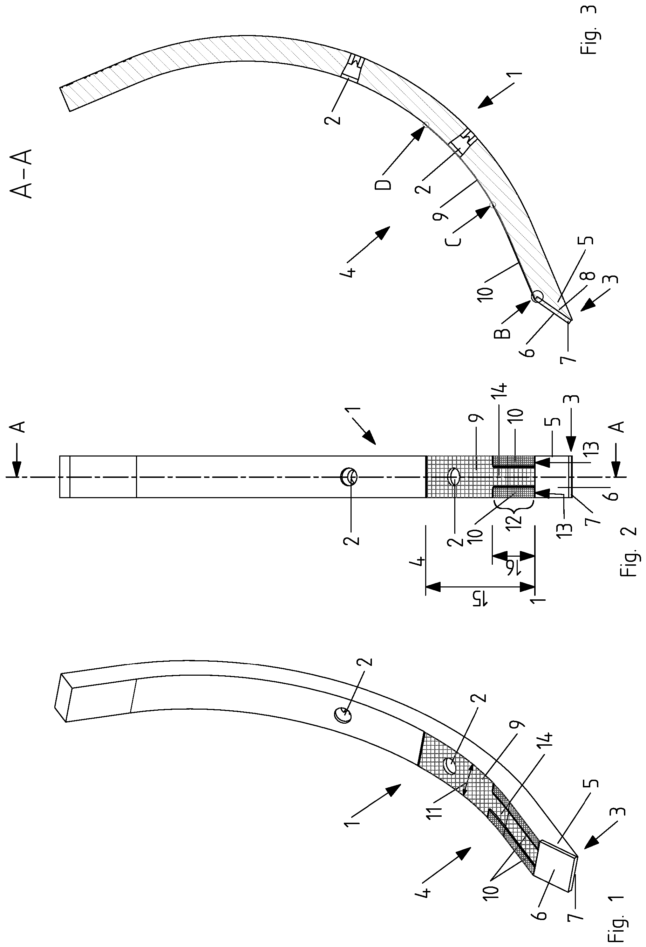

Weitere Einzelheiten der Erfindung sind der Beispielsbeschreibung und den Zeichnungen zu entnehmen. Die Zeichnungen zeigen
- Fig.1: das als Grubberschar ausgebildete erfindungsgemäße Bodenbearbeitungswerkzeug in perspektivischer Darstellung,
- Fig.2: das als Grubberschar ausgebildete erfindungsgemäße Bodenbearbeitungswerkzeug in Vorderansicht,
- Fig.3: das als Grubberschar ausgebildete erfindungsgemäße Bodenbearbeitungswerkzeug im Schnitt A - A,

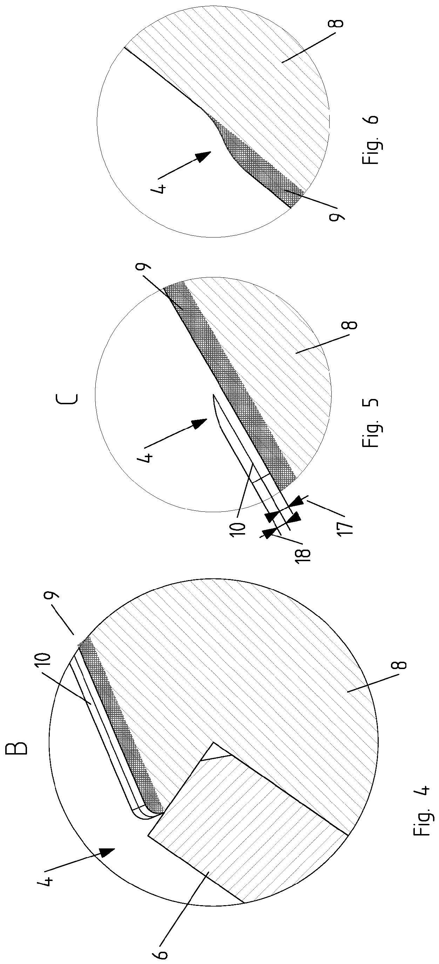

- Fig.4: als Einzelheit B den Übergang zwischen der Hartmetallplatten an der zinkenartigen Spitze des Bodenbearbeitungswerkzeuges und dem beiden Verschleißschutzschichten im Schnitt A - A im vergrößerten Maßstab,
- Fig.5: als Einzelheit C den Übergang zwischen den aufeinanderliegenden beiden Verschleißschutzschichten im vorderen Bereich des Bodenbearbeitungswerkzeuges und der erste sich über die gesamte Breite des Bodenführungsbereiches erstreckenden Verschleißschutzschicht im Schnitt A - A im vergrößerten Maßstab und
- Fig.6: als Einzelheit D die erste sich über die gesamte Breite des Bodenführungsbereiches erstreckende Verschleißschutzschicht im Schnitt A - A im vergrößerten Maßstab im Schnitt A - A im vergrößerten Maßstab.

Das als Grubberschar 1 ausgebildete Bodenbearbeitungswerkzeug für eine landwirtschaftliche Maschine ist mittels durch die in dem Bodenbearbeitungswerkzeug 1 angeordneten Durchbrüche 2 zu steckenden Befestigungsmittel, beispielsweise Schrauben in nicht dargestellter Weise an einem ebenfalls nicht dargestellten Werkzeughalter befestigt. Das Bodenbearbeitungswerkzeug 1 weist an seinem unteren Ende einen vorderen zinkenartigen Bereich 3 auf, an dem sich ein als leitblechartiges Element und/oder an den zinkenartigen Bereich anschließenden Bodenführungsbereich 4 zum Führen des Bodens, welches, wie im Ausführungsbeispiel dargestellt, in sich verbunden ausgestaltet ist, anschließt. Dieser Bodenführungsbereich 4 kann auch als Führungsplatte ausgebildet sein. Dieser Bodenführungsbereich 4 führt den von den zinkenartigen Bereich 3 aufgebrochenen Boden in gewünschter Weise nach oben, so dass eine Krümelung des Bodens stattfindet.

An der Zinkenspitze 5, die sich zu Beginn des zinkenartigen Bereiches 3 befindet, ist im Ausführungsbeispiel ein als Hartmetallplatte 6 ausgebildete Hartstoffelement, die beispielsweise aus Wolframcarbid stehen können, angeordnet. Die Hartmetallplatte 6 ist im Bereich der die Schneidkante 7 bildenden Bereich des zinkartigen Bereiches 3 angeordnet. Die Hartmetallplatte 6 ist unter Vermittlung von Lotmaterial auf dem Trägerelement 8 des Bodenbearbeitungswerkzeuges 1 befestigt Es ist auch möglich, dass mehrere schmalere Hartmetallplatten nebeneinander anstelle der einen Hartmetallplatten 6 hier angeordnet sind.

Unmittelbar an das Hartstoffelement 6 anschließend ist mittels Laserschweißung verschleißfestes Material als Verschleißschutzschicht 9 und 10 auf den sich an den zinkenartigen Bereich 3 anschließenden Bodenführungsbereich 4 zum Führen des Bodens verschleißfestes Material von zwei unmittelbar aneinander anschließenden und aufeinanderliegenden Verschleißschutzschichten 9 und 10 aus zumindest einem verschleißfesten Material aufgebracht.

Hierbei ist auf den sich an den zinkenartigen Bereich 3 anschließenden Bereich auf dem Bodenführungsbereich 4 des Bodenbearbeitungswerkzeuges 1 eine erste Verschleißschutzschicht 9 über die gesamte Breite 11 des Bodenführungsbereiches 4 des Bodenbearbeitungswerkzeuges 1 aufgebracht. Weiterhin sind in dem ersten, vorderen Bodenführungsbereich 12 des Bodenbearbeitungswerkzeuges 1 auf die erste Verschleißschutzschicht 9 jeweils in den seitlichen Randbereichen 13 des Bodenführungsbereich 4 des Bodenbearbeitungswerkzeuges 1 jeweils ein streifenartiger Verschleißschutzstreifen 10 mittels Laserschweißen als zweite Verschlussschutzschicht aufgebracht sind.

Die als zweite Verschleißschutzschicht aufgebrachten streifenartigen Verschleißschutzstreifen 10 sind beabstandet zueinander angeordnet. Somit ist ein Freiraum 14 oberhalb der ersten Verschleißschutzschicht 9 zwischen den beiden Verschleißschutzstreifen 10 zwischen den beiden als zweite Verschleißschutzschicht aufgebrachten streifenartigen Verschleißschutzstreifen 10 vorhanden. Jeder seitliche Verschleißschutzstreifen 10 weist etwa ¼ der Breite 12des bodenführenden Bereiches des Bodenbearbeitungswerkzeuges 1 aufweist.

Die erste sich über die gesamte Breite 12 des Bodenführungsbereich 4 erstreckende Verschleißschutzschicht weist eine Länge 15 von zumindest 150-250 mm, vorzugsweise 200 mm und die zweite als jeweiliger seitliche streifenartige Verschleißschutzstreifen 10 ausgebildete Verschutzschicht weist jeweils eine Länge 16 von zumindest 80-150 mm, vorzugsweise 100 mm auf.

Die eine erste Verschleißschutzschicht 9 weist eine Dicke 17 von 0,1 - 3 mm, vorzugsweise etwa 0,5 mm und die zweite als seitliche streifenartige Verschleißschutzstreifen 10 ausgebildete Verschleißschutzschicht weist eine Dicke 18 von 0,5 - 5 mm, vorzugsweise etwa 1 mm auf.

Mittels der vorbeschriebenen Verschleißschutzschichten 9 und wird mit einfach aufzubringenden Materialien ein wesentlich verbesserter Verschleißschutz für das Bodenbearbeitungswerkzeug 1, insbesondere ein Grubberschar erreicht. Der dem größten Verschleiß unterliegende zinkenartige Bereich 3 ist durch die Hartmetallplatte 6 geschützt, während in dessen Schatten durch eine wesentlich dünnere und preiswerter aufzubringende Verschleißschutzschicht 9 und 10 insgesamt ein optimierter Verschleißschutz für ein Bodenbearbeitungswerkzeug 1 erreicht wird.

## Patentansprüche

1. Bodenbearbeitungswerkzeug (1) für eine landwirtschaftliche Maschine, insbesondere Grubberschar, welches an einem Werkzeughalter (1) befestigt ist und am unteren Ende einen zinkenartigen Bereich (3) und einen sich daran anschließenden, den von dem zinkenartigen Bereich (3) aufgebrochenen Boden führenden Bodenführungsbereich (4), der vorzugsweise als bodenführende Führungsplatte ausgebildet ist, aufweist,
wobei im Bereich des die Schneidkante (7) bildenden zinkenartigen Bereichs (3) ein oder mehrere Hartstoffelemente (6) als Schneidelement unter Vermittlung von Lotmaterial angeordnet sind,
wobei sich unmittelbar an das Hartstoffelement (6) oder die Hartstoffelemente anschließend mittels Laserschweißung verschleißfestes Material als Verschleißschutzschicht (9, 10) auf den sich an den zinkenartigen Bereich (3) anschließenden Bodenführungsbereich (4) zum Führen des Bodens als zumindest eine Verschleißschutzschicht (9, 10) aus zumindest einem verschleißfesten Material aufgebracht ist,
**dadurch gekennzeichnet,**
**dass** auf den sich an den zinkenartigen Bereich (3) anschließenden Bereich auf dem Bodenführungsbereich (4) des Bodenbearbeitungswerkzeuges (1) eine erste Verschleißschutzschicht (9) über die gesamte Breite (11) des Bodenführungsbereichs (4) des Bodenbearbeitungswerkzeuges (1) aufgebracht ist, und
**dass** in dem ersten, vorderen Bodenführungsbereich (4) des Bodenbearbeitungswerkzeuges (1) auf die erste Verschleißschutzschicht (9) jeweils in den seitlichen Randbereichen (13) des Bodenführungsbereichs (4) des Bodenbearbeitungswerkzeuges (1) jeweils ein streifenartiger Verschleißschutzstreifen (10) mittels Laserschweißen als zweite Verschleißschutzschicht aufgebracht sind.

2. Bodenbearbeitungswerkzeug nach Anspruch 1, **dadurch gekennzeichnet, dass** die streifenartigen Verschleißschutzstreifen (10) beabstandet zueinander angeordnet sind.

3. Bodenbearbeitungswerkzeug nach Anspruch 1, **dadurch gekennzeichnet,**
**dass** die erste sich über die gesamte Breite (11) des Bodenführungsbereichs (4) erstreckende Verschleißschutzschicht (9) eine Länge (15) von zumindest 150-250 mm, vorzugsweise 200 mm und die zweite als jeweiliger seitliche streifenartige Verschleißschutzstreifen (10) ausgebildete Verschleißschutzschicht jeweils eine Länge (16) von zumindest 80-150 mm, vorzugsweise 100 mm aufweist.

4. Bodenbearbeitungswerkzeug nach Anspruch 1, **dadurch gekennzeichnet, dass** jeder seitliche Verschleißschutzstreifen (10) etwa 1/4 der Breite (11) des bodenführenden Bereiches (4) des Bodenbearbeitungswerkzeuges (1) aufweist.

5. Bodenbearbeitungswerkzeug nach zumindest einem der vorstehenden Ansprüche, **dadurch gekennzeichnet, dass** die eine erste Verschleißschutzschicht (9) eine Dicke (17) von 0,1 - 3 mm, vorzugsweise etwa 0,5 mm und die zweite als seitliche streifenartige Verschleißschutzstreifen (10) ausgebildete Verschleißschutzschicht eine Dicke (18) von 0,5 - 5 mm, vorzugsweise etwa 1 mm, aufweist.

## Claims

1. Soil cultivation tool (1) for an agricultural machine, in particular cultivator blade, which is fastened to a tool holder (1) and has, at a lower end, a tine-like region (3) and, adjoining the latter, a soil guiding region (4) that guides the soil broken up by the tine-like region (3) and is configured preferably as a soil-guiding guide plate, wherein one or more hard-material elements (6) are arranged, as cutting elements, in the region of the tine-like region (3) forming the cutting edge (7), with the aid of a brazing material, wherein, directly next to the hard-material element (6) or the hard-material elements, wear-resistant material has been applied by means of laser welding, as a wear-protection layer (9, 10), to the soil-guiding region (4), adjoining the tine-like region (3), for guiding the soil, as at least one wear-protection layer (9, 10) made of at least one wear-resistant material,
**characterized**
**in that** a first wear-protection layer (9) has been applied to the region, adjoining the tine-like region (3), on the soil-guiding region (4) of the soil cultivation tool (1), across the entire width (11) of the soil-guiding region (4) of the soil cultivation tool (1), and
**in that**, in the first, front soil-guiding region (4) of the soil cultivation tool (1), a respective strip-like wear-protection strip (10) has been applied by means of laser welding, as a second wear-protection layer, to the first wear-protection layer (9) in each case in the lateral peripheral regions (13) of the soil-guiding region (4) of the soil cultivation tool (1).

2. Soil cultivation tool according to Claim 1,
**characterized in that** the strip-like wear-protection strips (10) are arranged in a manner spaced apart from one another.

3. Soil cultivation tool according to Claim 1,
**characterized**
**in that** the first wear-protection layer (9), extending across the entire width (11) of the soil-guiding region (4), has a length (15) of at least 150-250 mm, preferably 200 mm, and the second wear-protection layer, in the form of a respective lateral strip-like wear-protection strip (10), has in each case a length (16) of at least 80-150 mm, preferably 100 mm.

4. Soil cultivation tool according to Claim 1, **characterized in that** each lateral wear-protection strip (10) exhibits about 1/4 of the width (11) of the soil-guiding region (4) of the soil cultivation tool (1).

5. Soil cultivation tool according to at least one of the preceding claims, **characterized in that** the one first wear-protection layer (9) has a thickness (17) of 0.1-3 mm, preferably about 0.5 mm, and the second wear-protection layer in the form of a lateral strip-like wear-protection strip (10) has a thickness (18) of 0.5-5 mm, preferably about 1 mm.

## Revendications

1. Outil de traitement du sol (1) pour une machine agricole, en particulier un soc de cultivateur, qui est fixé à un support d'outil (1) et présente à l'extrémité inférieure une zone en forme de dent (3) et une zone de suivi de terrain (4), consécutive à celle-ci et suivant le terrain retourné par la zone en forme de dent (3), qui est de préférence réalisée sous la forme d'une plaque de suivi suivant le terrain,
dans lequel, au niveau de la zone en forme de dent (3) formant l'arête de coupe (7), un ou plusieurs éléments en matériau dur (6) sont disposés comme élément de coupe par le biais d'un matériau de brasage,
dans lequel, en suivant directement le ou les éléments en matériau dur (6), un matériau résistant à l'usure est appliqué au moyen d'un soudage au laser comme une couche de protection contre l'usure (9, 10) à la zone de suivi de terrain (4) consécutive à la zone en forme de dent (3) pour suivre le terrain, comme au moins une couche de protection contre l'usure (9, 10) d'au moins un matériau résistant à l'usure,
**caractérisé en ce que**
sur la zone consécutive à la zone en forme de dent (3), sur la zone de suivi de terrain (4) de l'outil de traitement du sol (1), une première couche de protection contre l'usure (9) est appliquée sur toute la largeur (11) de la zone de suivi de terrain (4) de l'outil de traitement du sol (1), et
dans la première zone de suivi de terrain avant (4) de l'outil de traitement du sol (1), sur la première couche de protection contre l'usure (9), respectivement dans les zones marginales latérales (13) de la zone de suivi de terrain (4) de l'outil de traitement du sol (1), respectivement une bande de protection contre de l'usure (10) en forme de bande est appliquée comme une deuxième couche de protection contre l'usure au moyen d'un soudage au laser.

2. Outil de traitement du sol selon la revendication 1, **caractérisé en ce que** les bandes de protection contre l'usure (10) en forme de bande sont disposées à distance les unes des autres.

3. Outil de traitement du sol selon la revendication 1, **caractérisé en ce que**
la première couche de protection contre l'usure (9) s'étendant sur toute la largeur (11) de la zone de suivi de terrain (4) présente une longueur (15) d'au moins 150 à 250 mm, de préférence de 200 mm, et la deuxième couche de protection contre l'usure, réalisée comme une bande de protection contre l'usure (10) en forme de bande, latérale respective, présente respectivement une longueur (16) d'au moins 80 à 150 mm, de préférence de 100 mm.

4. Outil de traitement du sol selon la revendication 1, **caractérisé en ce que** chaque bande de protection contre l'usure (10) latérale présente approximativement 1/4 de la largeur (11) de la zone de suivi de terrain (4) de l'outil de traitement du sol (1).

5. Outil de traitement du sol selon au moins l'une des revendications précédentes, **caractérisé en ce que** ladite une première couche de protection contre l'usure (9) présente une épaisseur (17) de 0,1 à 3 mm, de préférence d'environ 0,5 mm, et la deuxième couche de protection contre l'usure, réalisée comme une bande de protection contre l'usure (10) en forme de bande, latérale, présente une épaisseur (18) de 0,5 à 5 mm, de préférence d'environ 1 mm.
